# EUROPEAN PATENT SPECIFICATION

(11) **EP 4 178 124 B1**
(45) Date of publication and mention of the grant of the patent: **18.03.2026**
(21) Application number: 21831594.3
(22) Date of filing: 02.07.2021
(51) Int. Cl.: H04B 17/23, H04B 17/309, H04N 1/00, H04W 48/16, B41J 29/00, B41J 29/38, B41J 29/42, G06F 3/12

(54) **IMAGE PROCESSING DEVICE AND IMAGE PROCESSING METHOD**
BILDVERARBEITUNGSVORRICHTUNG UND BILDVERARBEITUNGSVERFAHREN
DISPOSITIF DE TRAITEMENT D'IMAGES ET PROCÉDÉ DE TRAITEMENT D'IMAGES

(30) Priority: 02.07.2020 JP 2020114724
(43) Date of publication of application: 10.05.2023
(73) Proprietor: KYOCERA Document Solutions Inc., Osaka-shi, Osaka, 540-8585 (JP)
(72) Inventor: KITAO Tomoyuki, Osaka-shi, Osaka 540-8585 (JP)
(74) Representative: Plougmann Vingtoft a/s
(86) International application number: PCT/JP2021/025069
(87) International publication number: WO 2022/004869

(56) References cited:
- WO-A1-2014/031102
- WO-A1-2017/116853
- JP-A- 2006 173 809
- JP-A- 2007 011 819
- JP-A- 2009 093 223
- JP-A- 2013 075 437
- JP-A- 2016 174 295
- JP-A- 2018 137 657
- JP-A- 2019 033 445
- US-A1- 2004 102 192
- US-A1- 2007 041 036
- US-A1- 2014 357 201

## Description

### TECHNICAL FIELD

The present invention relates to an image processing apparatus and an image processing method.

### BACKGROUND

In recent years, an image forming apparatus equipped with a wireless LAN has been used. With the image forming apparatus, for example, a personal computer (PC) can wirelessly connect to the image forming apparatus via a predetermined access point (AP), and the image forming apparatus can perform printing processing or transfer image data scanned by the image forming apparatus to the PC.

The image forming apparatus may experience slow communication speed or disconnection in an environment where many devices are connected by a wireless LAN or an environment where a device, such as a microwave oven, using radio waves in the same frequency band is placed nearby.

Here, when the image forming apparatus is connected to a device by a wired LAN, a cable is used for the connection; therefore, when the connection between the devices is broken, it is possible to visually identify the cause such as a disconnected cable or a hub connecting the cable that is not turned on. In addition, when the communication speed is low, it is assumed that there are many PCs connected to the network or that the amount of communication data has temporarily increased, and the cause can be identified by capturing packets flowing through the cable.

However, when the image forming apparatus is connected to a device by a wireless LAN, there may be an influence of radio wave strength or radio wave interference, and it is difficult to visually identify the cause of communication interference. Therefore, when the connection between the devices is broken, it is difficult to identify the cause. In addition, since the communication speed is affected by the magnitude of the radio wave strength, the amount of data flowing through the network, and the like, it is also difficult to identify the cause of a decrease in the communication speed.

Conventionally, there has been known an image forming apparatus which notifies a user that the radio wave strength is not sufficient when the radio wave strength of a radio circuit becomes equal to or less than a predetermined threshold value (see, for example, Patent Literature 1).

Patent Literature 2 discloses a wireless communication device has a first wireless communication unit and a second wireless communication unit. A controller of the wireless communication device is configured to set a communication mode of the first wireless communication unit to a normal mode and a high-quality mode. A communication condition using the first wireless communication unit is detected, and whether the particular value is in a particular range indicating certain communication condition or not is determined. When a particular value is in not the particular range, and when the second wireless communication unit is currently in communication with the second external device, the communication mode of the first wireless communication unit is switched to a high-quality mode.

Patent Literature 3 discloses techniques of determining a context-based Quality of Experience based upon client device. Quality of Experience diagnostic files in combination with client device equipment dynamics. Client device Quality of Experience (QoE) diagnostic files may indicate a reduced QoE at a client device, such as reduced signal strength or an increased number of dropped packets. User behavior during a reduced QoE event may be reflected as equipment dynamics, which may be included in equipment dynamics files. A service provider may receive information from the client device and may analyze the information to determine, with an increased confidence level, that the user device experiences a reduced QoE. Network resources may be allocated in response to the reduced QoE determination, thereby increasing a functioning of the computing network and an associated device's Quality of Experience.

Patent Literature 4 discloses, in a digital multi-function peripheral, a network button (Available Network) is provided on a liquid crystal display section of an operator panel. When a user presses a currently available network button, a wireless communication control unit provides a main CPU 10 with an SSID that is used in a connectable wireless device (access point), along with a wireless mode, a channel and an RSSI. The main CPU causes the liquid crystal display section of the operator panel to display the RSSI value that is provided from the wireless communication control unit.

### CITATION LIST

### PATENT LITERATURE

Patent Literature 1: Japanese Unexamined Patent Application Publication No. 2019-179577
Patent Literature 2: US 2014/357201 A1
Patent Literature 3: WO 2017/116853 A1
Patent Literature 4: US 2007/041036 A1

### SUMMARY

### TECHNICAL PROBLEM

However, in the conventional technique, only the result that the radio wave strength has become equal to or less than the threshold value is notified to the user, and the user cannot grasp the communication environment such as how the radio wave strength became equal to or less than the threshold value. Therefore, it is difficult for the user to implement measures for preventing the occurrence of a communication failure or improving the communication environment.

An object of the present invention is to provide an image processing apparatus and an image processing method capable of presenting information relating to a communication environment to a user in an image processing apparatus connected to a device by a wireless LAN.

### SOLUTION TO PROBLEM

An image processing apparatus according to one aspect of the present invention comprises a connection processing portion, a detection processing portion, a transmission/reception processing portion, and an output processing portion. The connection processing portion configured to perform wireless connection to a predetermined access point. The detection processing portion configured to detect the radio wave strength of the access point. The transmission/reception processing portion configured to transmit and receive image data to and from a device connected to the access point. The output processing portion configured to output a plurality of communication environment information corresponding to a plurality of the access points; and information of a recommended access point for each time period which is identified based on the plurality of communication environment information. Each of the plurality of the communication environment information is associated with an amount of data of the image data corresponding to the access point, a radio wave strength of the access point during transmission and reception of the image data, and information indicating a communication status of the access point.

An image processing method according to another aspect of the present invention includes a connection step, a detection step, a transmission/reception step, and an output step. In the connection step, wireless connection to a predetermined access point is performed. In the detection step, the radio wave strength of the access point is detected. In the transmission/reception step, image data is transmitted and received to and from a device connected to the access point. In the output step, a plurality of communication environment information corresponding to a plurality of the access points; and information of a recommended access point for each time period which is identified based on the plurality of communication environment information. Each of the plurality of the communication environment information is associated with an amount of data of the image data corresponding to the access point, a radio wave strength of the access point during transmission and reception of the image data, and information indicating a communication status of the access point.

### ADVANTAGEOUS EFFECTS OF INVENTION

According to the present invention, there are provided an image processing apparatus and an image processing method capable of presenting information relating to a communication environment to a user in an image processing apparatus connected to a device by a wireless LAN.

### BRIEF DESCRIPTION OF THE DRAWINGS

FIG. 1 is a schematic configuration diagram of an image forming apparatus according to an embodiment of the present invention.
FIG. 2 is a functional block diagram of the image forming apparatus according to the embodiment of the present invention.
FIG. 3 is a graph showing an example of the radio wave strength detected by the image forming apparatus according to the embodiment of the present invention.
FIG. 4 shows an example of detection log information detected by the image forming apparatus according to the embodiment of the present invention.
FIG. 5 is a graph showing the relationship between the number of packets and the radio wave strength detected by the image forming apparatus according to the embodiment of the present invention.
FIG. 6 is a flowchart showing an example of the procedure of information presentation processing executed in the image forming apparatus according to the embodiment of the present invention.
FIG. 7 shows an example of communication environment information output from the image forming apparatus according to the embodiment of the present invention.
FIG. 8 shows an example of communication environment information output from the image forming apparatus according to the embodiment of the present invention.
FIG. 9 shows log information of connections and disconnections detected in the image forming apparatus according to the embodiment of the present invention.

### DETAILED DESCRIPTION

Embodiments of the present invention will be described below with reference to the accompanying drawings for understanding of the present invention. It is noted that the following embodiments are examples of embodying the present invention and do not limit the technical scope of the present invention.

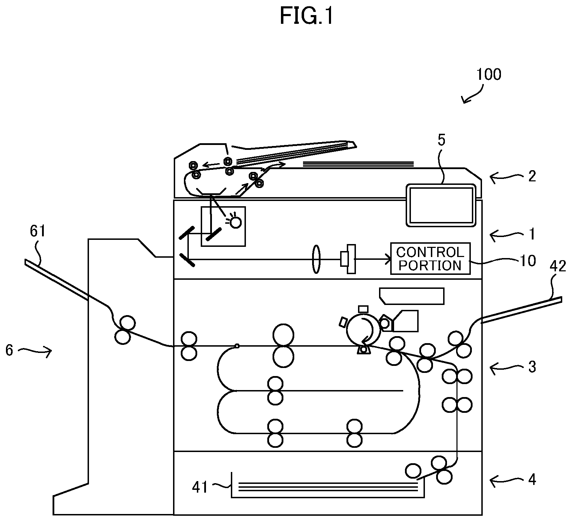

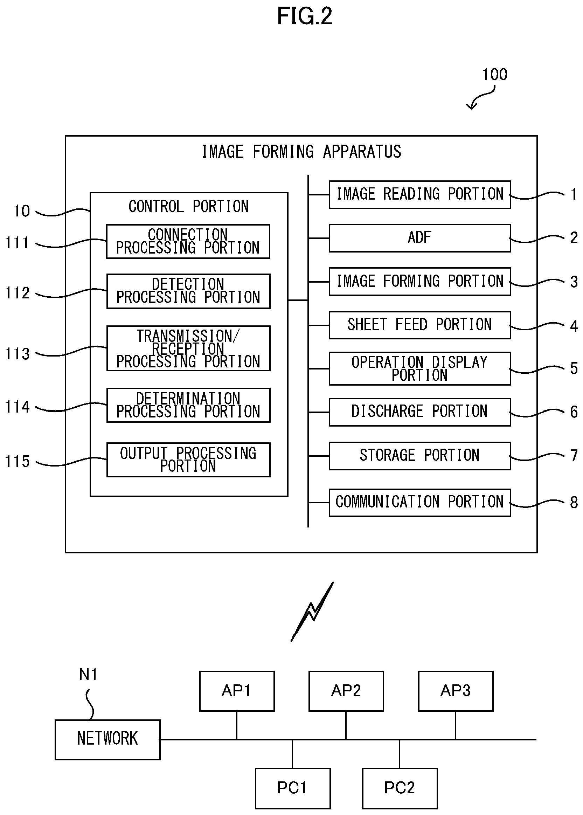

As shown in FIG. 1, an image forming apparatus 100 includes an image reading portion 1, an automatic document feeder (ADF) 2, an image forming portion 3, a sheet feed portion 4, an operation display portion 5, a discharge portion 6, a storage portion 7 (see FIG. 2), a communication portion 8 (see FIG. 2), a control portion 10, and the like. The image forming apparatus 100 is a multifunction peripheral having a plurality of functions such as a facsimile function for reading an image from a document sheet to obtain image data, a print function for forming an image based on image data, and a copy function. It is noted that the image forming apparatus 100 may be a printer, a facsimile machine, a copier, or the like. The image forming apparatus 100 is an example of the image processing apparatus of the present invention.

The communication portion 8 is a communication interface for wirelessly connecting the image forming apparatus 100 to an access point AP connected to a network N1 and performing data communication according to a predetermined communication protocol with an external device, such as a personal computer (PC), via the access point AP. The communication portion 8 is provided with a wireless LAN interface.

The access point AP is an IEEE802.11 (Wi-Fi) or other standard wireless LAN (Local Area Network) access point, a wireless LAN router, a wireless LAN-wired LAN network converter, a server with a built-in wireless LAN interface, or the like. The access point AP transmits a packet acquired from each device to the network N1, and causes a packet in the network N1 to be transmitted to each device. Thus, the access point AP can connect devices by causing the devices to perform packet communication with each other through a wireless LAN.

In addition, the access point AP may be capable of transmitting an SSID (Service Set Identifier), which is the identification name (network name) of the access point in the wireless LAN (Wi-Fi), to each device.

In the present embodiment, the network N1 is a wired LAN such as an intranet, the Internet, a WAN (Wide Area Network) such as a mobile phone network, or the like. When the network N1 is a WAN, the network N1 may be connectable to another server via a router, a gateway, or the like. In addition, the network N1 may constitute a VPN (Virtual Private Network).

FIG. 2 illustrates three access points AP1, AP2, and AP3. The access points AP1, AP2, and AP3 use, for example, the 2.4 GHz frequency band. In addition, in the example shown in FIG. 2, the network N1 constitutes an internal LAN in a specific office, and a plurality of PCs (for example, PC1 and PC2) used by respective users are connected to the network N1. For example, a user A transfers image data from PC1 to the image forming apparatus 100 via the access point AP1, and causes the image forming apparatus 100 to execute printing processing. In addition, for example, a user B causes the image forming apparatus 100 to scan an image and transfer the scanned image data to PC2 via the access point AP2.

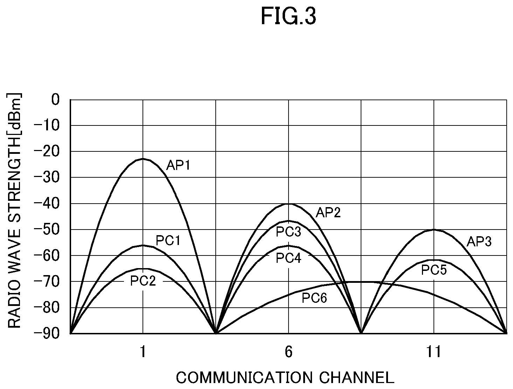

Here, a user such as a network administrator can designate an access point AP to which the image forming apparatus 100 is to be connected. For example, the user designates an access point AP suitable for transmission and reception (transfer processing) of image data based on the communication environment of the image forming apparatus 100, and causes the image forming apparatus 100 to connect to the access point AP. FIG. 3 is a graph showing the status of radio wave strength of each of the access points AP1, AP2, and AP3 detected in the image forming apparatus 100. Although the details will be described later, the control portion 10 (detection processing portion 112) of the image forming apparatus 100 can detect the radio wave strength of each of the access points AP1, AP2, and AP3 at the installation site of the image forming apparatus 100. The image forming apparatus 100 detects the radio wave strengths of an access point AP used in each communication channel and a device (PC) connected to the access point AP. In addition, the image forming apparatus 100 causes the operation display portion 5 of the image forming apparatus 100, the user's PC, or the like to display the graph shown in FIG. 3 as the detection result of the radio wave strengths. In addition, the image forming apparatus 100 may print out the detection result as a report. This allows the user to grasp the number of devices using the wireless LAN and the radio wave strength of each device and each access point AP.

The user selects (designates) an access point AP to be used for transferring image data with reference to the detection result. The example shown in FIG. 3 shows that the access point AP1 has the highest radio wave strength as the radio wave received by the image forming apparatus 100, and that the number of devices connected to a channel 1 is small and the interference is relatively small. Therefore, the user can determine that the access point AP1 is the optimum access point AP to which the image forming apparatus 100 is to be connected, and designate the access point AP1.

The control portion 10 (connection processing portion 111) of the image forming apparatus 100 connects the image forming apparatus 100 to the designated access point AP. In this way, the image forming apparatus 100 can connect to the access point AP designated by the user.

The image reading portion 1 includes a contact glass, a reading unit, a mirror, an optical lens, a CCD (Charge Coupled Device), and the like.

The ADF 2 includes a document sheet loading portion, a plurality of conveying rollers, a document sheet holder, and a sheet discharge portion, and conveys a document sheet to be read by the image reading portion 1.

The image forming portion 3 can form an image on a sheet by an electrophotographic method based on image data obtained at the image reading portion 1. In addition, the image forming portion 3 can also form an image on a sheet based on image data input from an external device (for example, a user's PC). Specifically, the image forming portion 3 includes a photoconductor drum, a charging device, a laser scanning unit (LSU), a developing device, a transfer roller, a cleaning device, a fixing roller, and a pressure roller. It is noted that the image forming portion 3 may form an image on a sheet by another image forming method such as an inkjet method. In addition, the image forming portion 3 conveys a sheet (printing sheet) on which an image has been formed to the discharge portion 6.

The sheet feed portion 4 includes a sheet storing portion 41 and a plurality of conveying rollers, and supplies a sheet to the image forming portion 3. The sheet feed portion 4 is controlled by the control portion 10 to convey a sheet stored in the sheet storing portion 41 to the image forming portion 3. In addition, the sheet feed portion 4 includes a manual feed tray 42 on which a user manually (by a manual feed) sets a sheet. The sheet feed portion 4 is controlled by the control portion 10 to convey a sheet set on the manual feed tray 42 to the image forming portion 3. In the present embodiment, the sheet storing portion 41 is provided on the lower side as viewed from the front of the image forming apparatus 100, and the manual feed tray 42 is provided on the right side as viewed from the front of the image forming apparatus 100.

The discharge portion 6 discharges a printing sheet on which an image has been formed by the image forming portion 3. The discharge portion 6 includes one or more discharge trays 61. When a plurality of discharge trays 61 are provided, the discharge trays 61 are provided at positions different in height from the installation surface (floor surface) of the image forming apparatus 100. The discharge portion 6 is controlled by the control portion 10 to discharge the printing sheet to a predetermined discharge tray 61. The discharge portion 6 discharges the printing sheet to a determined discharge tray 61 in accordance with a command of the control portion 10. In the present embodiment, the discharge tray 61 is provided on the left side as viewed from the front of the image forming apparatus 100.

The operation display portion 5 includes a display portion such as a liquid crystal display for displaying various types of information in response to a command of the control portion 10, and an operation portion such as an operation key or a touch panel for inputting various types of information to the control portion 10 in response to a user's operation.

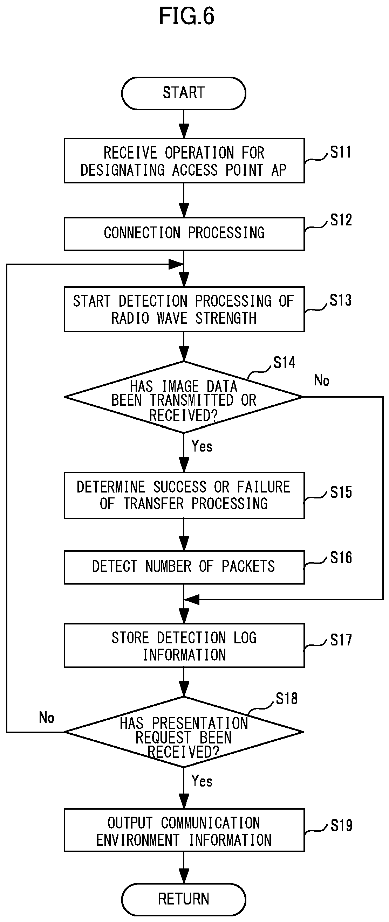

The storage portion 7 is a nonvolatile storage device. For example, the storage portion 7 is a storage device such as a nonvolatile memory including a flash memory, an EEPROM (registered trademark), and the like, an SSD, or an HDD. The storage portion 7 stores various control programs such as an information presentation program for causing the control portion 10 to execute information presentation processing (see FIG. 6) to be described later, various types of data, and the like.

The control portion 10 includes control devices such as a CPU, a ROM, and a RAM. The CPU is a processor that executes various types of arithmetic processing. The ROM is a nonvolatile storage portion in which information such as control programs for causing the CPU to execute various types of processing are stored in advance. The RAM is a volatile or nonvolatile storage portion used as a temporary storage memory (work area) for various types of processing executed by the CPU.

Meanwhile, in the conventional technique, only the result that the radio wave strength has become equal to or less than the threshold value is notified to the user, and the user cannot grasp the communication environment such as how the radio wave strength became equal to or less than the threshold value. Therefore, it is difficult for the user to implement measures for preventing the occurrence of a communication failure or improving the communication environment. In contrast, the image forming apparatus 100 according to the present embodiment can present information relating to the communication environment to the user.

Specifically, as shown in FIG. 2, the control portion 10 includes various processing portions such as a connection processing portion 111, a detection processing portion 112, a transmission/reception processing portion 113, a determination processing portion 114, and an output processing portion 115. It is noted that the control portion 10 functions as the various processing portions by executing various types of processing according to the information presentation program at the CPU. In addition, some or all of the processing portions included in the control portion 10 may be constituted by electronic circuits. It is noted that the information presentation program may be a program for causing a plurality of processors to function as the various processing portions.

The connection processing portion 111 wirelessly connects the image forming apparatus 100 to a predetermined access point AP. For example, when the user designates a predetermined access point AP on a setting screen displayed on the operation display portion 5 of the image forming apparatus 100, the connection processing portion 111 connects the image forming apparatus 100 to the designated access point AP. When the connection between the image forming apparatus 100 and the access point AP is established, data communication via the access point AP becomes possible between the image forming apparatus 100 and a device connected to the network N1. As the connection method to the access point AP, a well-known technique can be applied. The connection processing portion 111 is an example of the connection processing portion of the present invention.

The detection processing portion 112 detects the radio wave strength of an access point AP. For example, as described above, the detection processing portion 112 detects the radio wave strength of each of a plurality of access points AP from which the image forming apparatus 100 can receive radio waves (see FIG. 3).

In addition, the detection processing portion 112 detects the radio wave strength of a specific access point AP connected by the connection processing portion 111. For example, when the power of the image forming apparatus 100 is turned on and the image forming apparatus 100 is connected to the designated access point AP, the detection processing portion 112 starts detection processing of the radio wave strength of the access point AP. The detection processing portion 112 continues the detection processing until the connection between the image forming apparatus 100 and the access point AP is interrupted (predetermined period). In addition, in the detection processing, the detection processing portion 112 detects the radio wave strength when the transmission/reception processing portion 113 transmits and receives image data. That is, the detection processing portion 112 detects the radio wave strength of the access point AP1 at the time of transmission and reception of the image data. The detection processing portion 112 stores the detection result of the predetermined period in the storage portion 7.

It is noted that the user may be able to set the period during which the detection processing is executed in the image forming apparatus 100. For example, the user may be able to set a start date and time and an end date and time of the detection processing on the setting screen. In this case, the detection processing portion 112 executes the detection processing only for the period set by the user.

The transmission/reception processing portion 113 transmits and receives image data to and from a device connected to the access point AP. Specifically, the transmission/reception processing portion 113 transmits and receives image data to and from a device (PC) connected to a specific access point AP connected by the connection processing portion 111. For example, when the image forming apparatus 100 is connected to the access point AP1 and image data for printing is output from PC1, the transmission/reception processing portion 113 receives the image data transferred from the access point AP1. When the transmission/reception processing portion 113 acquires the image data, the image forming portion 3 forms an image on a sheet based on the image data. In addition, for example, when the image forming apparatus 100 is connected to the access point AP1 and the image forming apparatus 100 executes scanning processing of an image, the transmission/reception processing portion 113 outputs image data obtained by the image reading portion 1 to the access point AP1. The access point AP1 transfers the received image data to PC2.

Here, the transmission/reception processing portion 113 transmits and receives the image data by packet communication. In the packet communication, a transfer error may occur in which some packets of the image data are not transferred normally. Such a transfer error is likely to occur when the data amount of image data is large or when the communication environment is not good.

Therefore, in the present embodiment, the determination processing portion 114 determines whether or not the image data has been transferred normally. Then, the transmission/reception processing portion 113 detects the data amount (for example, the number of packets) of the image data, the number of packets of the image data that have been transferred normally (normal transfer packets) (the number of normal transfer packets), and the number of packets of the image data that have not been transferred normally (error transfer packets) (the number of error transfer packets). The transmission/reception processing portion 113 stores these detection results in the storage portion 7.

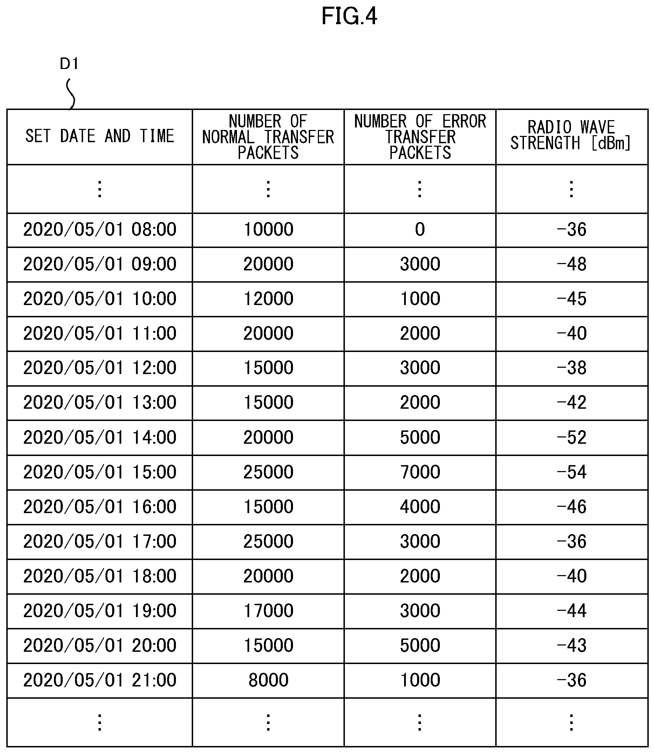

Here, the control portion 10 generates detection log information D1 based on the detection result of the detection processing portion 112 and the detection results of the transmission/reception processing portion 113, and stores the detection log information D1 in the storage portion 7. FIG. 4 shows an example of the detection log information D1. The detection log information D1 includes information such as the number of normal transfer packets, the number of error transfer packets, and the radio wave strength for each set date and time. The set date and time is a date and time set in advance by the user, and is set, for example, at an hourly time (every hour on the hour) in the use time period in which the image forming apparatus 100 is used. It is noted that the set date and time is not limited to every hour on the hour, and may be every two hours, every week, or every month.

The number of normal transfer packets is information calculated based on the normal transfer packets detected by the transmission/reception processing portion 113. For example, the control portion 10 registers, as the number of normal transfer packets, the number of packets obtained by adding up the normal transfer packets detected by the transmission/reception processing portion 113 every hour. The number of error transfer packets is information calculated based on the error transfer packets detected by the transmission/reception processing portion 113. For example, the control portion 10 registers, as the number of error transfer packets, the number of packets obtained by adding up the error transfer packets detected by the transmission/reception processing portion 113 every hour.

The radio wave strength is information calculated based on the radio wave strength detected by the detection processing portion 112. For example, the control portion 10 registers, as the radio wave strength, an average value obtained by averaging the radio wave strengths detected by the detection processing portion 112 at the time of transmission and reception of image data every hour. It is noted that the control portion 10 may register, as the radio wave strength, the maximum value or the minimum value of the radio wave strength for each hour.

As described above, the control portion 10 generates the detection log information D1 in association with the data amount of the image data (the number of normal transfer packets, the number of error transfer packets) and the radio wave strength. The control portion 10 registers each type of information in the detection log information D1, for example, every hour.

It is noted that FIG. 4 shows detection log information D1 corresponding to a specific access point AP designated by the user. Here, when the user switches the access point AP to which the image forming apparatus 100 is connected, the detection processing portion 112 detects the radio wave strength of the switched access point AP, and the transmission/reception processing portion 113 transmits and receives image data via the switched access point AP. Then, the control portion 10 generates detection log information D1 corresponding to the switched access point AP. Therefore, the storage portion 7 stores detection log information D1 for each access point AP. For example, when the image forming apparatus 100 has a record of using the access points AP1, AP2, and AP3, detection log information D1 corresponding to each of the access points AP1, AP2, and AP3 is stored in the storage portion 7.

The output processing portion 115 outputs communication environment information including the radio wave strength of the access point AP at the time of transmission and reception of the image data. The communication environment information is information used when the user selects an access point AP to which the image forming apparatus 100 is to be connected, and the user can designate a specific access point AP by referring to the communication environment information. The output processing portion 115 causes the communication environment information to be displayed on at least one of the image forming apparatus 100 and the PC.

Specifically, the output processing portion 115 outputs communication environment information in which the data amount (the number of packets) of the image data and the radio wave strength of the access point AP are associated with each other. In addition, the output processing portion 115 may further output a determination result as to whether or not image data has been transferred normally. For example, the output processing portion 115 outputs communication environment information in which the data amount of the image data, the radio wave strength of the access point AP, and the determination result (transfer success, transfer failure, etc.) are associated with each other.

In addition, for example, the output processing portion 115 may output communication environment information in which the number of packets of the image data that have been transferred normally (the number of normal transfer packets), the number of packets of the image data that have not been transferred normally (the number of error transfer packets), and the radio wave strength of the access point AP are associated with each other. In addition, for example, the output processing portion 115 may output communication environment information indicating changes in the data amount of the image data and the radio wave strength of the access point AP during a predetermined period (for example, one day, one week, one month, etc.). Specifically, the output processing portion 115 presents the detection log information D1 (see FIG. 4) generated by the control portion 10 to the user. For example, the output processing portion 115 causes a predetermined PC or the operation display portion 5 of the image forming apparatus 100 to display the detection log information D1. The detection log information D1 is an example of the communication environment information of the present invention.

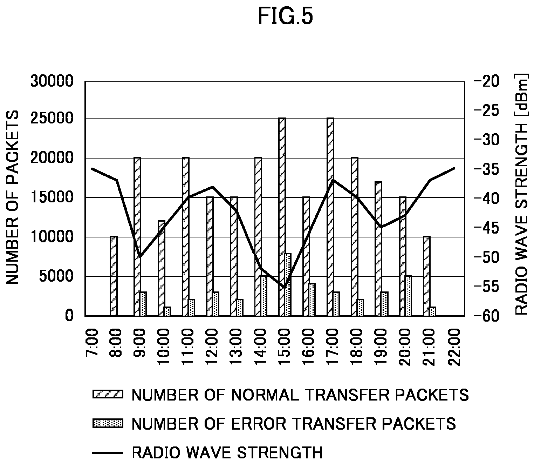

In addition, the output processing portion 115 may present a graph corresponding to the detection log information D1 to the user so that the user can easily understand how the radio wave strength has changed. FIG. 5 shows an example of the graph generated by the control portion 10 based on the detection log information D1. The control portion 10 generates detection log information D1 based on the detection results of the detection processing portion 112 and the transmission/reception processing portion 113, and generates a graph based on the detection log information D1. The graph is an example of the communication environment information of the present invention. This allows the user to easily grasp the magnitude of the radio wave strength at the time of transmission and reception of the image data, the number of packets per hour, and how the number of packets and the radio wave strength change.

It is noted that when the user selects an access point AP and performs an operation to request communication environment information on the setting screen, the output processing portion 115 presents the detection log information D1 corresponding to the access point AP (see FIG. 4) or the graph (see FIG. 5) to the user. In addition, the output processing portion 115 may output the communication environment information corresponding to a plurality of access points AP. In addition, the output processing portion 115 may print out the communication environment information (detection log information D1, the graph) in the image forming apparatus 100.

### [Information Presentation Processing]

An example of the procedure of information presentation processing executed by the control portion 10 in the image forming apparatus 100 will be described below with reference to the flowchart of FIG. 6. It is noted that the processing steps executed by the control portion 10 will be referred to as steps S11, S12, .... It is noted that one or more steps included in the information presentation processing described here may be omitted as appropriate. In addition, the steps in the information presentation processing may be executed in a different order to the extent that they produce similar effects. Furthermore, although the case in which the steps in the information presentation processing are executed by the control portion 10 of the image forming apparatus 100 is described here as an example, in other embodiments, the steps in the information presentation processing may be executed by a plurality of other processors in a distributed manner.

Here, the present invention can be understood as an invention of an information presentation method for executing one or more steps included in the information presentation processing. The information presentation method is an example of the image processing method of the present invention.

First, in step S11, the control portion 10 receives an operation for designating an access point AP from a user (for example, a network administrator). For example, when the user selects, on the setting screen, one access point AP from a list of access points AP from which the image forming apparatus 100 can receive radio waves, the control portion 10 acquires identification information of the access point AP.

Next, in step S12, the control portion 10 executes connection processing for connecting the image forming apparatus 100 to the designated access point AP. When the connection between the image forming apparatus 100 and the access point AP is established, data communication via the access point AP becomes possible between the image forming apparatus 100 and a device connected to the network N1. Step S12 is an example of the connection step of the present invention.

Next, in step S13, the control portion 10 starts detection processing of the radio wave strength of the access point AP connected to the image forming apparatus 100. For example, the control portion 10 detects the radio wave strength at a predetermined sampling period. The control portion 10 stores the detection result in the storage portion 7. Step S13 is an example of the detection step of the present invention.

Next, in step S14, the control portion 10 determines whether or not image data has been transmitted or received. When the control portion 10 determines that image data has been transmitted or received (Yes in S14), the processing proceeds to step S15. In addition, when image data has been transmitted or received, the control portion 10 detects the radio wave strength of the access point AP at the time of transmission or reception of the image data. The control portion 10 stores the radio wave strength detected at the time of transmission or reception of the image data in the storage portion 7. When the control portion 10 does not determine that image data has been transmitted or received (No in S14), the processing proceeds to step S17. Step S14 is an example of the transmission/reception step of the present invention.

In step S15, the control portion 10 determines whether or not the image data has been transferred normally (success or failure). The control portion 10 determines the success or failure of the transfer of the image data based on the number of packets of the image data.

Next, in step S16, the control portion 10 detects the number of normal transfer packets and the number of error transfer packets of the image data based on the determination result in step S15.

Next, in step S17, the control portion 10 generates detection log information D1 (see FIG. 4) based on the radio wave strength at the time of transmission or reception of the image data and the number of normal transfer packets and the number of error transfer packets of the image data, and stores the detection log information D1 in the storage portion 7. It is noted that when the control portion 10 does not determine that the image data has been transmitted or received in step S14 (No in S14), the control portion 10 registers the radio wave strength corresponding to the set time in the detection log information D1.

Next, in step S18, the control portion 10 determines whether or not a request for presentation of communication environment information has been received from the user. When the control portion 10 has received the presentation request from the user (Yes in S18), the processing proceeds to step S19. On the other hand, when the control portion 10 has not received the presentation request from the user (No in S18), the processing returns to step S13. Returning to step S13, the control portion 10 repeats the processing described above.

Next, in step S19, the control portion 10 presents the communication environment information to the user. For example, the control portion 10 causes the user's PC or the operation display portion 5 of the image forming apparatus 100 to display the detection log information D1 (see FIG. 4). In addition, the control portion 10 may cause the user's PC or the operation display portion 5 of the image forming apparatus 100 to display the graph (see FIG. 5) generated based on the detection log information D1. In addition, the control portion 10 may cause the image forming apparatus 100 to print out the communication environment information (detection log information D1, the graph) as a report. Step S19 is an example of the output step of the present invention.

The control portion 10 executes the information presentation processing as described above. The control portion 10 executes the information presentation processing every time an access point AP is designated by the user.

As described above, the image forming apparatus 100 according to the present embodiment wirelessly connects to a predetermined access point AP, and outputs communication environment information including the radio wave strength of the access point AP at the time of transmission or reception of image data transmitted or received via the access point AP. Specifically, the image forming apparatus 100 presents to the user communication environment information in which the number of normal transfer packets, the number of error transfer packets, and the radio wave strength of the access point in a predetermined period are associated with each other. This makes it possible to present useful information relating to the communication environment of the image forming apparatus 100 to the user. Therefore, the user can easily grasp the communication environment corresponding to the image forming apparatus 100. In addition, based on the information (communication environment information), the user can take measures to prevent the occurrence of a communication failure or to improve the communication environment.

For example, according to the graph shown in FIG. 5, it can be seen at a glance that the radio wave strength is weak and the number of error transfer packets is large from 14:00 to 15:00. From this, it can be inferred that there was some change that caused radio interference during this time period. Therefore, by identifying and remedying the cause of radio interference, the user can prevent future communication failures and continue comfortable wireless communication.

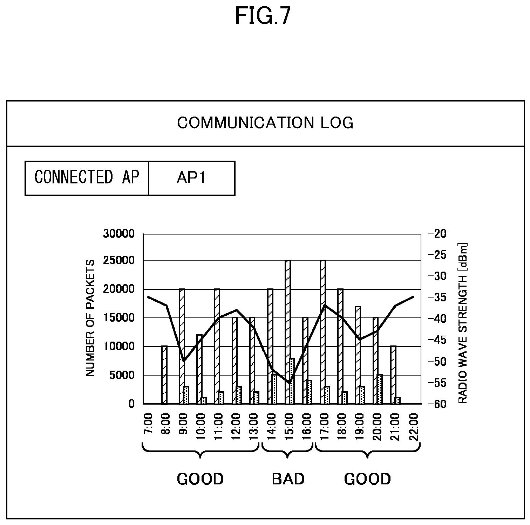

The present invention is not limited to the above-described embodiment. As another embodiment of the present invention, the output processing portion 115 outputs communication environment information in which the data amount of the image data (the number of normal transfer packets, the number of error transfer packets), the radio wave strength of the access point AP, and information indicating the communication state of the access point AP (good, bad, etc.) are associated with each other. FIG. 7 shows another example of the communication environment information. As shown in FIG. 7, information indicating the communication state of the access point AP1 is displayed for each time period. This allows the user to easily grasp the communication state.

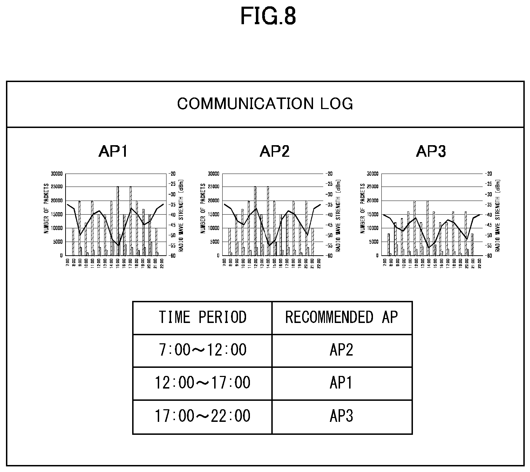

In addition, as another embodiment of the present invention, the output processing portion 115 outputs communication environment information corresponding to a plurality of access points AP and information of a recommended access point AP for each time period which is identified based on that communication environment information. FIG. 8 shows another example of the communication environment information. As shown in FIG. 8, the output processing portion 115 causes a graph corresponding to each of the access points AP1, AP2, and AP3 to be displayed, and causes an access point AP having a good communication state to be displayed as a recommended access point AP for each time period. That is, the output processing portion 115 outputs communication environment information including information of an access point AP suitable for the image forming apparatus 100 among a plurality of access points AP. This allows the user to grasp the suitable access point AP for each time period and thus set an access point AP appropriately.

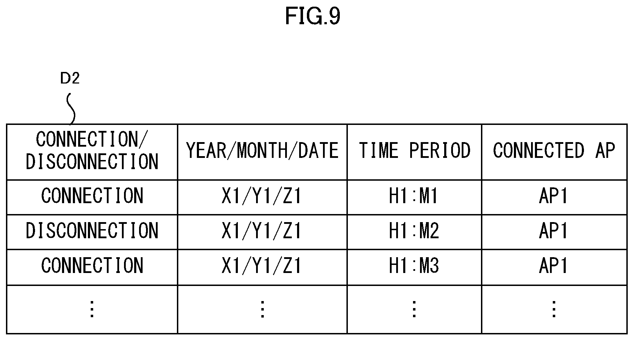

When the connection between the access point AP and the image forming apparatus 100 is broken due to some kind of failure, communication between the two becomes impossible; however, when a function to recover from the disconnected state is set in the image forming apparatus 100, it is difficult for the user to recognize that the communication has been disconnected. Therefore, as another embodiment, the control portion 10 may store log information D2 of disconnection/reconnection in the storage portion 7. FIG. 9 shows an example of the log information D2.

The log information D2 can suggest to the user whether or not a disconnection occurred frequently during the day and what the trend is in this case. The control portion 10 can present the log information D2 to the user by generating it and causing it to be displayed on the operation display portion 5, to be checked on the connected PC, or to be printed out as a report. For example, when the time of disconnection was during the daytime and during normal use, it is presumed that communication was not possible during that time. In this case, confirming the cause and taking measures to prevent recurrence can help to improve the communication environment thereafter.

## Claims

1. An image processing apparatus (100) comprising:
a connection processing portion (111) configured to perform wireless connection to a predetermined access point, AP;
a detection processing portion (112) configured to detect a radio wave strength of the access point, AP;
a transmission/reception processing portion (113) configured to transmit and receive image data to and from a device connected to the access point, AP; and
an output processing portion (115) configured to output a plurality of communication environment information corresponding to a plurality of the access points, AP; and information of a recommended access point, AP, for each time period which is identified based on the plurality of communication environment information, wherein
each of the plurality of the communication environment information is associated with an amount of data of the image data corresponding to the access point, AP, a radio wave strength of the access point, AP, during transmission and reception of the image data, and information indicating a communication status of the access point, AP.

2. The image processing apparatus (100) according to claim 1, further comprising:
a determination processing portion (114) for determining whether or not all packets of the image data have been transferred, wherein
the output processing portion (115) outputs the communication environment information in which the data amount of the image data, the radio wave strength of the access point, AP, and a determination result by the determination processing portion (114) are associated with each other.

3. The image processing apparatus (100) according to claim 1, further comprising:
a determination processing portion (114) for determining whether or not all packets of the image data have been transferred, wherein
the output processing portion (115) outputs the communication environment information in which a number of packets of the image data that have been transferred, a number of packets of the image data that has not been transferred, and the radio wave strength of the access point, AP, are associated with each other.

4. The image processing apparatus (100) according to claim 1, wherein the output processing portion (115) outputs the communication environment information indicating changes in a data amount of the image data and in the radio wave strength of the access point , AP, during a predetermined period.

5. The image processing apparatus (100) according to claim 1, wherein the output processing portion (115) outputs the communication environment information corresponding to each of a plurality of the access points, AP.

6. The image processing apparatus (100) according to claim 1, wherein the output processing portion (115) causes the image processing apparatus (100) to print out the communication environment information.

7. An image processing method comprising:
a connection step of performing wirelessly connection to a predetermined access point, AP;
a detection step of detecting a radio wave strength of the access point, AP;
a transmission/reception step of transmitting and receiving image data to and from a device connected to the access point, AP; and
an output step of outputting a plurality of communication environment information corresponding to a plurality of the access points, AP; and information of a recommended access point, AP, for each time period which is identified based on the plurality of communication environment information, wherein
each of the plurality of the communication environment information is associated with an amount of data of the image data corresponding to the access point, AP, a radio wave strength of the access point, AP, during transmission and reception of the image data, and information indicating a communication status of the access point, AP.

## Patentansprüche

1. Bildverarbeitungseinrichtung (100), umfassend:
einen Verbindungsverarbeitungsabschnitt (111), der so konfiguriert ist, dass er eine drahtlose Verbindung zu einem vorbestimmten Zugangspunkt, AP, herstellt;
einen Detektionsverarbeitungsabschnitt (112), der so konfiguriert ist, dass er eine Funkwellenstärke des Zugangspunkts, AP, detektiert;
einen Sende-/Empfangsverarbeitungsabschnitt (113), der so konfiguriert ist, dass er Bilddaten an eine mit dem Zugangspunkt, AP, verbundene Vorrichtung sendet und von dieser empfängt; und
einen Ausgabeverarbeitungsabschnitt (115), der so konfiguriert ist, dass er eine Vielzahl von Kommunikationsumgebungsinformationen, die einer Vielzahl von Zugangspunkten, AP, entsprechen, und Informationen über einen empfohlenen Zugangspunkt, AP, für jeden Zeitraum ausgibt, der auf der Grundlage der Vielzahl von Kommunikationsumgebungsinformationen identifiziert wird, wobei
jede der Vielzahl von Kommunikationsumgebungsinformationen mit einer Datenmenge der Bilddaten, die dem Zugangspunkt, AP, entsprechen, einer Funkwellenstärke des Zugangspunkts, AP, während der Übertragung und des Empfangs der Bilddaten und Informationen, die einen Kommunikationsstatus des Zugangspunkts, AP, angeben, verbunden ist.

2. Bildverarbeitungseinrichtung (100) nach Anspruch 1, weiter umfassend:
einen Bestimmungsverarbeitungsabschnitt (114) zum Bestimmen, ob alle Pakete der Bilddaten übertragen worden sind oder nicht, wobei
der Ausgabeverarbeitungsabschnitt (115) die Kommunikationsumgebungsinformationen ausgibt, in denen die Datenmenge der Bilddaten, die Funkwellenstärke des Zugangspunkts, AP, und ein Bestimmungsergebnis durch den Bestimmungsverarbeitungsabschnitt (114) miteinander verbunden sind.

3. Bildverarbeitungseinrichtung (100) nach Anspruch 1, weiter umfassend:
einen Bestimmungsverarbeitungsabschnitt (114) zum Bestimmen, ob alle Pakete der Bilddaten übertragen wurden oder nicht, wobei
der Ausgabeverarbeitungsabschnitt (115) die Kommunikationsumgebungsinformationen ausgibt, in denen eine Anzahl von Paketen der Bilddaten, die übertragen wurden, eine Anzahl von Paketen der Bilddaten, die nicht übertragen wurden, und die Funkwellenstärke des Zugangspunkts, AP, miteinander verbunden sind.

4. Bildverarbeitungseinrichtung (100) nach Anspruch 1, wobei der Ausgabeverarbeitungsabschnitt (115) die Kommunikationsumgebungsinformationen ausgibt, die Änderungen der Datenmenge der Bilddaten und der Funkwellenstärke des Zugangspunkts, AP, während eines vorbestimmten Zeitraums angeben.

5. Bildverarbeitungseinrichtung (100) nach Anspruch 1, wobei der Ausgabeverarbeitungsabschnitt (115) die Kommunikationsumgebungsinformationen ausgibt, die jedem einer Vielzahl von Zugangspunkten, AP, entsprechen.

6. Bildverarbeitungseinrichtung (100) nach Anspruch 1, wobei der Ausgabeverarbeitungsabschnitt (115) die Bildverarbeitungseinrichtung (100) veranlasst, die Kommunikationsumgebungsinformationen auszudrucken.

7. Bildverarbeitungsverfahren, umfassend:
einen Verbindungsschritt, bei dem eine drahtlose Verbindung zu einem vorbestimmten Zugangspunkt, AP, hergestellt wird;
einen Detektionsschritt, bei dem eine Funkwellenstärke des Zugangspunkts, AP, detektiert wird;
einen Sende-/Empfangsschritt, bei dem Bilddaten zu einer mit dem Zugangspunkt, AP, verbundenen Vorrichtung gesendet und von dieser empfangen werden; und
einen Ausgabeschritt, bei dem eine Vielzahl von Kommunikationsumgebungsinformationen, die einer Vielzahl von Zugangspunkten, AP, entsprechen, und Informationen über einen empfohlenen Zugangspunkt, AP, für jeden Zeitraum, der auf der Grundlage der Vielzahl von Kommunikationsumgebungsinformationen identifiziert wird, ausgegeben werden, wobei
jede der Vielzahl von Kommunikationsumgebungsinformationen mit einer Datenmenge der Bilddaten, die dem Zugangspunkt, AP, entsprechen, einer Funkwellenstärke des Zugangspunkts, AP, während der Übertragung und des Empfangs der Bilddaten und Informationen, die einen Kommunikationsstatus des Zugangspunkts, AP, angeben, verbunden ist.

## Revendications

1. Appareil de traitement d'images (100) comprenant :
une partie de traitement de connexion (111) configurée pour établir une connexion sans fil avec un point d'accès préétabli, AP ;
une partie de traitement de détection (112) configurée pour détecter une intensité des ondes radio du point d'accès, AP ;
une partie de traitement de transmission/réception (113) configurée pour transmettre et recevoir des données d'image à et depuis un dispositif connecté au point d'accès, AP ; et
une partie de traitement de sortie (115) configurée pour fournir une pluralité d'informations relatives à l'environnement de communication correspondant à une pluralité des points d'accès, AP ; et des informations relatives à un point d'accès, AP, recommandé, pour chaque espace de temps qui est identifié sur la base de la pluralité d'informations relatives à l'environnement de communication,
chacune parmi la pluralité d'informations relatives à l'environnement de communication étant associée à une quantité de données des données d'image correspondant au point d'accès, AP, à une intensité des ondes radio du point d'accès, AP, pendant la transmission et la réception des données d'image, et à des informations indiquant un état de communication du point d'accès, AP.

2. Appareil de traitement d'images (100) selon la revendication 1, comprenant en outre :
une partie de traitement de détermination (114) destinée à déterminer si tous les paquets des données d'image ont été transférés ou non, dans lequel
la partie de traitement de sortie (115) fournit les informations relatives à l'environnement de communication dans lesquelles la quantité de données des données d'image, l'intensité des ondes radio du point d'accès, AP, et un résultat de détermination par la partie de traitement de détermination (114) sont associés les uns aux autres.

3. Appareil de traitement d'images (100) selon la revendication 1, comprenant en outre :
une partie de traitement de détermination (114) destinée à déterminer si tous les paquets des données d'image ont été transférés ou non, dans lequel
la partie de traitement de sortie (115) fournit les informations relatives à l'environnement de communication dans lesquelles sont associés les uns aux autres un certain nombre de paquets des données d'image qui ont été transférés, un certain nombre de paquets de données d'image qui n'ont pas été transférés et l'intensité des ondes radio du point d'accès, AP.

4. Appareil de traitement d'images (100) selon la revendication 1, dans lequel la partie de traitement de sortie (115) fournit les informations relatives à l'environnement de communication indiquant des modifications dans une quantité de données des données d'image et dans l'intensité des ondes radio du point d'accès, AP, pendant une période préétablie.

5. Appareil de traitement d'images (100) selon la revendication 1, dans lequel la partie de traitement de sortie (115) fournit les informations relatives à l'environnement de communication correspondant à chacun parmi une pluralité des points d'accès, AP.

6. Appareil de traitement d'images (100) selon la revendication 1, dans lequel la partie de traitement de sortie (115) amène l'appareil de traitement d'images (100) à imprimer les informations relatives à l'environnement de communication.

7. Procédé de traitement d'images comprenant :
une étape de connexion consistant à établir une connexion sans fil avec un point d'accès préétabli, AP ;
une étape de détection consistant à détecter une intensité des ondes radio du point d'accès, AP ;
une étape de transmission/réception consistant à transmettre et à recevoir des données d'image à et depuis un dispositif connecté au point d'accès, AP ; et
une étape de sortie consistant à fournir une pluralité d'informations relatives à l'environnement de communication correspondant à une pluralité des points d'accès, AP ; et des informations relatives à un point d'accès, AP, recommandé, pour chaque espace de temps qui est identifié sur la base de la pluralité d'informations relatives à l'environnement de communication, dans lequel
chacune parmi la pluralité d'informations relatives à l'environnement communication est associée à une quantité de données des données d'image correspondant au point d'accès, AP, à une intensité des ondes radio du point d'accès, AP, pendant la transmission et la réception des données d'image, et à des informations indiquant un état de communication du point d'accès, AP.
